# EUROPÄISCHE PATENTSCHRIFT

(11) **EP 2 781 743 B1**
(45) Veröffentlichungstag und Bekanntmachung des Hinweises auf die Patenterteilung: **06.05.2015**
(21) Anmeldenummer: 13159992.0
(22) Anmeldetag: 19.03.2013
(51) Int. Cl.: F03G 7/06, B60R 1/00

(54) **Aktuator und Außenspiegel**
Actuator and exterior rear view mirror
Actionneur et rétroviseur extérieur

(43) Veröffentlichungstag der Anmeldung: 24.09.2014
(73) Patentinhaber: SMR Patents S.à.r.l., 1653 Luxembourg (LU)
(72) Erfinder: Wieczorek, Romeo, 73732 Esslingen (DE); Herrmann, Andreas, 71364 Winnenden (DE)
(74) Vertreter: Weber-Bruls, Dorothée

(56) Entgegenhaltungen:
- WO-A1-2009/103117
- DE-A1-102005 055 849
- FR-A1- 2 912 977

## Beschreibung

Die Erfindung betrifft einen Aktuator für einen Außenspiegel eines Kraftfahrzeugs, mit mindestens einem Aktuatorzapfen, mit mindestens einem einen Hohlraum umfassenden Trommelkörper, in dem der Aktuatorzapfen drehfest anordenbar oder angeordnet ist, mit mindestens einem Anstellmittel, das mindestens ein Formgedächtniselement umfasst, das an dem Trommelkörper festlegbar oder festgelegt ist und mit dem der Trommelkörper in eine erste Drehrichtung bewegbar ist, und mit mindestens einem Rückstellmittel, das mindestens ein Formgedächtniselement umfasst, das an dem Trommelkörper festlegbar oder festgelegt ist und mit dem der Trommelkörper in eine zweite Drehrichtung bewegbar ist. Darüber hinaus umfasst die Erfindung einen Außenspiegel mit einem derartigen Aktuator sowie ein Verfahren zum Betreiben eines derartigen Aktuators.

Ein Aktuator ist bekannt aus DE 10 2005 059 081 A1, der ein Anstellmittel und ein Rückstellmittel umfasst, die jeweils aus Formgedächtnismaterial gebildet und jeweils an einem Trommelkörper festgelegt sind. Beim Bestromen des Anstellmittels beziehungsweise des Rückstellmittels verkürzt sich das Formgedächtnismaterial und eine Stellbewegung des Trommelkörpers wird erfolgt. Bei diesem Aktuator hat es sich als nachteilig erwiesen, dass lediglich geringe Stellbewegungen ermöglicht sind.

Die Druckschrift DE 10 2005 055849 A wird als nächstliegender Stand der Technik angesehen.

Darüber hinaus sind bei Außenspiegeln Aktuatoren ohne Formgedächtniselemente bekannt, die mittels Elektromotoren Stellbewegungen des Außenspiegels ermöglichen. Das Verwenden von Elektromotoren ist jedoch kostenintensiv und raumgreifend.

Aufgabe der Erfindung ist, einen Aktuator sowie einen Außenspiegel mit einem Aktuator vorzuschlagen, mit dem große Stellbewegungen ermöglicht sind und der kompakt baut.

Diese Aufgabe wird durch einen eingangs genannten Aktuator erfindungsgemäß dadurch gelöst, dass das Anstellmittel und/oder das Rückstellmittel an einem Wickelabschnitt des Trommelkörpers festlegbar oder festgelegt ist und an dem Wickelabschnitt des Trommelkörpers mit mindestens einer viertel Wicklung, insbesondere mindestens einer halben Wicklung, insbesondere mit einer ganzen Wicklung, insbesondere mit einer Mehrzahl an Wicklungen, anliegt.

Formgedächtniselemente zeichnen sich dadurch aus, dass sie beim Bestromen oder beim Zuführen von Wärme ihre Gesamterstreckung reduzieren. Unbestromt oder bei Unterschreiten einer bestimmten Temperatur beim Erkalten wird das Formgedächtniselement elastisch. Dadurch, dass das Anstellmittel und/oder das Rückstellmittel am Wickelabschnitt des Trommelkörpers mit zumindest einer Viertelwicklung anliegt und am Trommelkörper festgelegt ist, ist eine Stellbewegung des Außenspiegels durch den Aktuator von einer Parkstellung, in der der Außenspiegel an der Außenhaut des Kraftfahrzeugs anliegt, in eine Arbeitsstellung, in der der Außenspiegel ausgeklappt ist, um einem Fahrzeugfahrer einen Blick in den rückwärtigen Bereich ermöglicht.

Die Mehrzahl an Wicklungen kann beispielsweise eine Wicklung, zwei Wicklungen, drei Wicklungen, vier Wicklungen, fünf Wicklungen und viel mehr umfassen. Hierdurch ist es ermöglicht, dass der Trommelkörper durch das Anstellmittel und/oder durch das Rückstellmittel beispielsweise um 30°, 90°, 180°, 360° und darüber hinaus verschwenkbar ist.

Es ist denkbar, dass das Anstellmittel und das Rückstellmittel mit gleichem oder mit unterschiedlichem Drehsinn an dem Wickelabschnitt des Trommelkörpers festgelegt sind.

Wenn das Anstellmittel und das Rückstellmittel an einem gleichen Wickelabschnitt des Trommelkörpers festgelegt sind, kann der Aktuator und der Außenspiegel kompakt ausgebildet werden. Wenn das Anstellmittel und das Rückstellmittel jeweils an einem eigenen Wickelabschnitt des Trommelkörpers festgelegt sind, kann die Montage erleichtert sein. Darüber hinaus kann solchenfalls dem Wickelabschnitt des Anstellmittels und dem Wickelabschnitt des Rückstellmittels jeweils eine Spanneinrichtung zugeordnet sein, die eine straffe Wicklung des Anstellmittels und/oder des Rückstellmittels gewährleistet.

Es erweist sich als vorteilhaft, wenn der Wickelabschnitt mindestens eine, insbesondere spiralförmige, Aufnahme umfasst, in der der das Anstellmittel und/oder das Rückstellmittel zumindest bereichsweise geführt gehalten ist, insbesondere gegen eine Bewegung in radialer Richtung gehalten ist.

Hierdurch wird einem unbeabsichtigten Verrutschen des Anstellmittels und/oder des Rückstellmittels vorgebeugt. Der Trommelkörper kann grundsätzlich ein beliebiges Material umfassen, beispielsweise einen Kunststoff. Um ein Beschädigen des Trommelkörpers zumindest zu reduzieren, erweist es sich als vorteilhaft, wenn der Aktuator mindestens ein Isolationsmittel umfasst, das zwischen dem Anstellmittel und/oder dem Rückstellmittel oder dem Wickelabschnitt anordenbar oder angeordnet ist.

In Weiterbildung letztgenannten Erfindungsgedankens erweist es sich als vorteilhaft, wenn das Isolationsmittel Keramik und/oder Glas umfasst. Vorteilhafterweise ist das mindestens eine Isolationsmittel stegförmig ausgebildet und eine Mehrzahl an Isolationsmitteln kranzartig um den Wickelabschnitt des Trommelkörpers verteilt, um ein Anliegen des Anstellmittels und/oder des Rückstellmittels unmittelbar am Trommelkörper zu verhindern.

Der Wickelabschnitt kann grundsätzlich an einer beliebigen Stelle des Trommelkörpers vorgesehen sein. Der Aktuator erweist sich als einfach herstellbar, wenn der Wickelabschnitt an einer, insbesondere zylindrischen, Ummantelung des Trommelkörpers gebildet ist.

Grundsätzlich ist es denkbar, dass der Aktuatorzapfen drehfest an einem Gehäuse des Außenspiegels oder an einem Karosserieelement festlegbar oder festgelegt ist. Darüber hinaus ist es denkbar, dass der Trommelkörper am Gehäuse des Außenspiegels oder am Karosserieelement drehfest festlegbar oder festgelegt ist.

Wenn der Aktuatorzapfen drehfest am Gehäuse des Außenspiegels angeordnet ist, ist der Drehkörper drehfest an einem Karosserieelement festgelegt. Wenn der Aktuatorzapfen drehfest am Karosserieelement festgelegt ist, ist der Trommelkörper drehfest am Gehäuse des Außenspiegels festgelegt. Solchenfalls ist es ermöglicht, dass eine durch das Anstellmittel und/oder durch das Rückstellmittel übertragene Bewegung auf den Trommelkörper zu einer Bewegung des Außenspiegels führt.

Der Aktuatorzapfen kann grundsätzlich beliebig im Hohlraum des Trommelkörpers drehfest festgelegt sein. Er kann beispielsweise mit dem Hohlkörper verklebt oder verschweißt sein.

Aktuatorzapfen und Trommelkörper lassen sich kostengünstig und wartungsfreundlich herstellen, wenn der Aktuatorzapfen im Hohlraum des Trommelkörpers formschlüssig angeordnet ist.

Ferner erweist es sich als vorteilhaft, wenn das Anstellmittel und/oder das Rückstellmittel einen Draht aus Formgedächtnismaterial, insbesondere ein ein Zweiweg-(Memory)-Effekt aufweisendes Formgedächtnismaterial, umfasst, der bei Bestromen und/oder durch Temperaturänderung ein Reduzieren der Erstreckung des Anstellmittels und/oder des Rückstellmittels umfasst.

Bei einer Ausführungsform des erfindungsgemäßen Aktuators ist vorgesehen, dass das Anstellmittel und/oder das Rückstellmittel ein Federelement umfasst, mit dem das Rückstellmittel bzw. das Anstellmittel in eine unbetätigte Parkstellung vorspannbar oder vorgespannt ist. Wenn das Anstellmittel ein Formgedächtnismaterial sowie das Rückstellmittel ein Federelement umfasst wird der Aktuator automatisch in eine unbetätigte Parkstellung zurückgeführt, wenn das Anstellmittel nicht bestromt wird oder durch Temperatur beaufschlagt wird. Umgekehrt stellt das Anstellmittel automatisch den Aktuator in die unbetätigte Parkstellung zurück, wenn es das Federelement umfasst und das Rückstellmittel ein Formgedächtnismaterial umfasst und nicht durch elektrische Energie oder Wärme beaufschlagt wird.

Bei einer weiteren Ausführungsform des erfindungsgemäßen Aktuators umfasst dieser mindestens eine Einstelleinheit, an der das Anstellmittel und/oder das Rückstellmittel mit einem freien Ende anordenbar und durch die Einstelleinheit mit elektrischer Energie oder Wärme beaufschlagbar ist.

Bei einer weiteren Ausführungsform des erfindungsgemäßen Aktuators umfasst dieser mindestens eine Steuereinheit, durch die ein Bestromen und/oder Erhitzen des Anstellmittels und/oder des Rückstellmittels durch die Einstelleinheit steuerbar ist.

Durch die Steuereinheit kann es vermieden werden, dass sowohl das Anstellmittel als auch das Rückstellmittel zeitgleich bestromt werden. Darüber hinaus kann durch die Steuereinheit gewährleistet werden, dass das Anstellmittel lediglich dann mit Temperatur oder mit Strom beaufschlagt wird, wenn das Rückstellmittel eine gewisse Temperatur unterschreitet, unter der es wieder elastisch ist. Dieses gilt in gleicher Weise für das Rückstellmittel.

Um die Temperatur des Anstellmittels beziehungsweise des Rückstellmittels zu erfassen ist bei einer Ausführungsform des erfindungsgemäßen Aktuators ein der Steuereinheit funktional zugeordnetes Sensormittel vorgesehen, mit dem zumindest die Temperatur des Anstellmittels und/oder des Rückstellmittels erfassbar ist. Vorzugsweise erfolgt die Erfassung der Temperatur durch ein Verfahren, das eine Bestimmung eines elektrischen Widerstands, insbesondere des Anstellmittels und/oder des Rückstellmittels, umfasst.

Darüber hinaus wird die Aufgabe gelöst durch einen eingangs genannten Außenspiegel, der mindestens ein Gehäuse und mindestens einen Aktuator, insbesondere mit mindestens einem der zuvor genannten Merkmale, umfasst.

Schließlich wird die Aufgabe gelöst durch ein Verfahren zum Betreiben eines Aktuators, insbesondere mit mindestens einem der zuvor genannten Merkmale, mit mindestens einem Aktuatorzapfen, mit mindestens einem einen Hohlraum umfassenden Trommelkörper, in dem der Aktuatorzapfen drehfest anordenbar oder angeordnet ist, mit mindestens einem Anstellmittel, das mindestens ein Formgedächtniselement umfasst, das an dem Trommelkörper festlegbar oder festgelegt ist und mit dem der Trommelkörper in eine erste Drehrichtung bewegbar ist, und mit mindestens einem Rückstellmittel, das mindestens ein Formgedächtniselement umfasst, das an dem Trommelkörper festlegbar oder festgelegt ist und mit dem der Trommelkörper in eine zweite Drehrichtung bewegbar ist, mit den Schritten:
a) Erfassen eines Signals zum Betreiben des Aktuators;
b) Erfassen der Temperatur des Anstellkörpers und/oder des Rückstellkörpers durch mindestens ein Sensormittel;
c) Erwärmen und/oder Bestromen des Anstellmittels durch eine Einstelleinheit und Blockieren eines Erwärmen des Rückstellmittels durch eine Steuereinheit, wenn die Temperatur des Anstellmittels unter einer bestimmten Temperatur liegt und/oder Bestromen des Rückstellmittels durch die Einstelleinheit und Blockieren eines Erwärmen des Anstellmittels durch die Steuereinheit, wenn die Temperatur des Anstellmittels unter einer bestimmten Temperatur liegt.

Der Erfindungsgemäße Aktuator, der erfindungsgemäße Außenspiegel sowie das erfindungsgemäße Verfahren erweisen sich in mehrfacher Hinsicht als vorteilhaft:
Dadurch, dass das Anstellmittel und/oder das Rückstellmittel an einem Wickelabschnitt des Trommelkörpers mit mindestens einer Viertelwicklung anliegen, können große Stellbewegungen des Trommelkörpers erzielt werden. Hierdurch ist es ermöglicht, dass beispielsweise ein Außenspiegel von einer am Kraftfahrzeug angeklappten Parkstellung in eine ausgeklappte Betriebsstellung zu überführen. Dadurch, dass der Aktuator eine Steuereinheit umfasst, kann gewährleistet werden, dass eine Anstellbewegung beziehungsweise eine Rückstellbewegung lediglich dann ermöglicht ist, wenn das Anstellmittel und/oder das Rückstellmittel eine Temperatur erreicht haben, bei der es wieder elastisch ist. Hierdurch wird die Gefahr einer Beschädigung des Aktuators reduziert.

Weitere Merkmale, Einzelheiten sowie Vorteile der Erfindung ergeben sich aus den beigefiigten Patentansprüchen, aus der zeichnerischen Darstellung und nachfolgender Beschreibung einer bevorzugten Ausführungsform eines erfindungsgemäßen Aktuators.

In der Zeichnung zeigt:

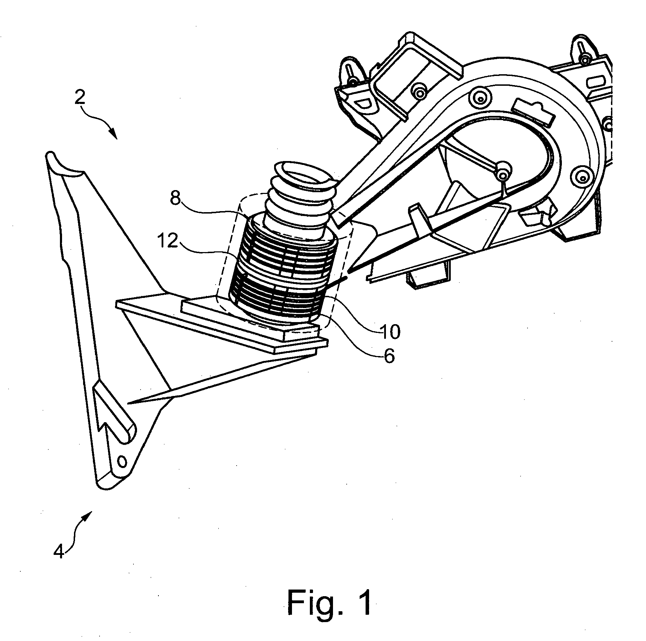

- Figur 1: eine schematische Seitenansicht der Anordnung eines Außenspiegels mit Aktuator an einem Kraftfahrzeug;

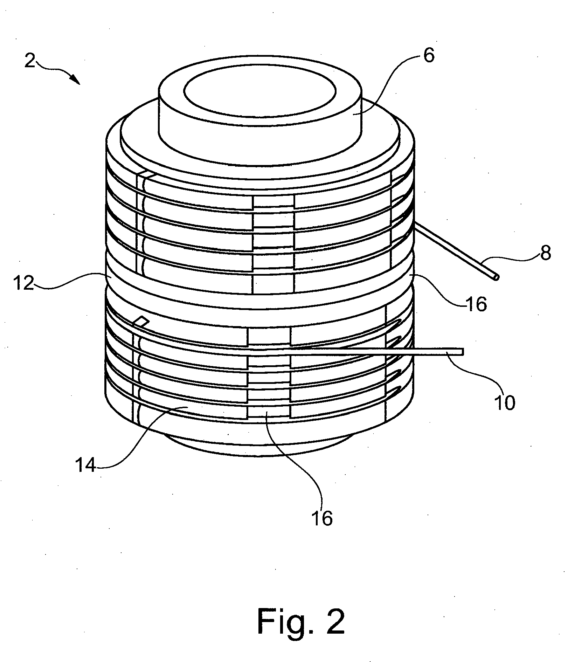

- Figur 2: eine Detailansicht eines Aktuators der Anordnung gemäß Figur 1.

Die Figuren zeigen einen insgesamt mit dem Bezugszeichen 2 versehenen Aktuator für einen Außenspiegel 4 eines Kraftfahrzeugs. Der Aktuator 2 umfasst einen Aktuatorzapfen (in den Figuren nicht ersichtlich), auf den ein Trommelkörper 6 mit einem Hohlraum aufgesteckt ist. Der Aktuator 2 umfasst ein Anstellmittel 8 sowie ein Rückstellmittel 10, die beide am Trommelkörper 6 festgelegt sind. Bei dem in den Figuren dargestellten Ausführungsbeispiel sind sowohl das Anstellmittel 8 als auch das Rückstellmittel 10 an jeweils einem Wickelabschnitt 12 des Trommelkörpers 6 festgelegt. Anstellmittel 8 und Rückstellmittel 10 liegen mit einer Mehrzahl an Wicklungen an dem Wickelabschnitt 12 des Trommelkörpers 6 an.

Das Anstellmittel 8 und das Rückstellmittel 10 umfassen jeweils ein Formgedächtniselement, das sich bei Erhitzen beziehungsweise bei Zuführen von elektrischer Energie bezüglich seiner Gesamterstreckung verkürzt. Um ein Verrutschen oder ein sich Lösen des Anstellmittels 8 und des Rückstellmittels 10 von dem Trommelkörper 6, insbesondere vom Wickelabschnitt 12 des Trommelkörpers 6 zu reduzieren, umfasst der Wickelabschnitt 12 eine spiralförmige Aufnahme 14 die an einer Mantelfläche des Trommelkörpers 6 angeordnet ist. Anstellmittel 8 und Rückstellmittel 12 sind durch die Aufnahme 14 mit unterschiedlichem Drehsinn auf den Wickelabschnitt 12 aufgewickelt.

Zwischen dem Anstellmittel 8 und dem Rückstellmittel 12 sind Isolationsmittel 16 angeordnet, die das Anstellmittel 8 und das Rückstellmittel 10 von der Mantelfläche des Trommelkörpers 6 beabstanden.

Um den Außenspiegel 4 von einer angeklappten Parkstellung, in der der Außenspiegel 4 am Kraftfahrzeug anliegt, in eine ausgeklappte Position zu überführen, wird das Anstellmittel 8 bestromt oder erhitzt. Hierdurch verkürzt sich das Anstellmittel 8. Dieses führt zu einer Drehung des Trommelkörpers 6 und zu einer Übertragung des Drehmoments auf die Aktuatorachse, die drehfest mit dem Gehäuse des Außenspiegels 4 verbunden ist. Das Rückstellmittel 10 ist hierbei unbestromt und unerhitzt. Um den Außenspiegel 4 wieder am Kraftfahrzeug anzuklappen, wird das Rückstellmittel 10 bestromt, wodurch sich das Rückstellmittel 10 verkürzt und den Trommelkörper 6 in entgegengesetzte Drehrichtung dreht.

Die in der vorstehenden Beschreibung, in den Ansprüchen, sowie in den Zeichnungen gezeigten Merkmale der Erfindung können sowohl einzeln, als auch in jeder beliebigen Kombination in der Verwirklichung der Erfindung und ihren verschiedenen Ausführungsformen wesentlich sein.

### Bezugszeichenliste

- 2: Aktuator
- 4: Außenspiegel
- 6: Trommelkörper
- 8: Anstellmittel
- 10: Rückstellmittel
- 12: Wickelabschnitt
- 14: Aufnahme
- 16: Isolationsmittel

## Patentansprüche

1. Aktuator (2) für einen Außenspiegel (4) eines Kraftfahrzeugs, mit mindestens einem Aktuatorzapfen, mit mindestens einem einen Hohlraum umfassenden Trommelkörper (6), in dem der Aktuatorzapfen drehfest anordenbar oder angeordnet ist, mit mindestens einem Anstellmittel (8), das mindestens ein Formgedächtniselement umfasst, das an dem Trommelkörper (6) festlegbar oder festgelegt ist und mit dem der Trommelkörper (6) in eine erste Drehrichtung bewegbar ist, und mit mindestens einem Rückstellmittel (10), das mindestens ein Formgedächtniselement umfasst, das an dem Trommelkörper (6) festlegbar oder festgelegt ist und mit dem der Trommelkörper (6) in eine zweite Drehrichtung bewegbar ist, **dadurch gekennzeichnet, dass** das Anstellmittel (8) und/oder das Rückstellmittel (10) an einem Wickelabschnitt (12) des Trommelkörpers (6) festlegbar oder festgelegt ist und an dem Wickelabschnitt (12) des Trommelkörpers (6) mit mindestens einer viertel Wicklung, insbesondere mindestens einer halben Wicklung, insbesondere mit einer ganzen Wicklung, insbesondere mit einer Mehrzahl an Wicklungen, anliegt.

2. Aktuator (2) nach Anspruch 1, **dadurch gekennzeichnet, dass** das Anstellmittel (8) und das Rückstellmittel (10) mit gleichem oder mit unterschiedlichem Drehsinn an dem Wickelabschnitt (12) des Trommelkörpers (6) festgelegt sind.

3. Aktuator (2) nach Anspruch 1 oder 2, **dadurch gekennzeichnet, dass** der Wickelabschnitt (12) mindestens eine, insbesondere spiralförmige, Aufnahme (14) umfasst, in der das Anstellmittel (8) und/oder das Rückstellmittel (10) zumindest bereichsweise geführt gehalten ist, insbesondere gegen eine Bewegung in radialer Richtung gehalten ist.

4. Aktuator (2) nach mindestens einem der vorhergehenden Ansprüche, **gekennzeichnet durch** mindestens ein Isolationsmittel (16), das zwischen dem Anstellmittel (8) und/oder dem Rückstellmittel (10) und dem Wickelabschnitt (12) anordenbar oder angeordnet ist.

5. Aktuator (2) nach Anspruch 4, **dadurch gekennzeichnet, dass** das Isolationsmittel (16) Keramik und/oder Glas umfasst.

6. Aktuator (2) nach mindestens einem der vorhergehenden Ansprüche, **dadurch gekennzeichnet, dass** der Wickelabschnitt (12) an einer, insbesondere zylindrischen, Ummantelung des Trommelkörpers (6) gebildet ist.

7. Aktuator (2) nach mindestens einem der vorhergehenden Ansprüche, **dadurch gekennzeichnet, dass** der Aktuatorzapfen drehfest an einem Gehäuse des Außenspiegels (4) oder an einem Karosserieelement festlegbar oder festgelegt ist.

8. Aktuator (2) nach mindestens einem der vorhergehenden Ansprüche, **dadurch gekennzeichnet, dass** der Trommelkörper (6) am Gehäuse des Außenspiegels (4) oder am Karosserieelement drehfest festlegbar oder festgelegt ist.

9. Aktuator (2) nach mindestens einem der vorhergehenden Ansprüche, **dadurch gekennzeichnet, dass** das Anstellmittel (8) und/oder das Rückstellmittel (10) einen Draht aus Formgedächtnismaterial, insbesondere ein einen Zweiweg-(Memory)-Effekt aufweisendes Formgedächtnismaterial, umfasst, der bei Bestromen und/oder durch Temperaturänderung ein Reduzieren der Erstreckung des Anstellmittels (8) und/oder des Rückstellmittels (10) umfasst.

10. Aktuator (2) nach mindestens einem der vorhergehenden Ansprüche, **dadurch gekennzeichnet, dass** das Anstellmittel (8) und/oder das Rückstellmittel (10) ein Federelement umfasst, mit dem das Rückstellmittel (10) bzw. das Anstellmittel (8) in eine unbetätigte Parkstellung vorspannbar oder vorgespannt ist.

11. Aktuator (2) nach mindestens einem der vorhergehenden Ansprüche, **gekennzeichnet durch** mindestens eine Einstelleinheit, an der das Anstellmittel (8) und/oder das Rückstellmittel (10) mit einem freien Ende anordenbar und **durch** die Einstelleinheit mit elektrischer Energie oder Wärme beaufschlagbar ist.

12. Aktuator (2) nach mindestens einem der vorhergehenden Ansprüche, **gekennzeichnet durch** mindestens eine Steuereinheit, **durch** die ein Bestromen und/oder Erhitzen des Anstellmittels (8) und/oder des Rückstellmittels (10) **durch** die Einstelleinheit steuerbar ist.

13. Aktuator (2) nach Anspruch 12, **gekennzeichnet durch** mindestens ein der Steuereinheit funktional zugeordnetes Sensormittel, mit dem zumindest die Temperatur des Anstellmittels (8) und/oder des Rückstellmittels (10) erfassbar ist, insbesondere **durch** Bestimmung eines elektrischen Widerstands.

14. Außenspiegel (4) für ein Kraftfahrzeug, mit mindestens einem Gehäuse und mit mindestens einem Aktuator (2), insbesondere nach einem der Ansprüche 1 bis 13.

15. Verfahren zum Betreiben eines Aktuators (2), insbesondere nach einem der Ansprüche 1 bis 13, mit mindestens einem Aktuatorzapfen, mit mindestens einem einen Hohlraum umfassenden Trommelkörper (6), in dem der Aktuatorzapfen drehfest anordenbar oder angeordnet ist, mit mindestens einem Anstellmittel (8), das mindestens ein Formgedächtniselement umfasst, das an dem Trommelkörper (6) festlegbar oder festgelegt ist und mit dem der Trommelkörper (6) in eine erste Drehrichtung bewegbar ist, und mit mindestens einem Rückstellmittel (10), das mindestens ein Formgedächtniselement umfasst, das an dem Trommelkörper (6) festlegbar oder festgelegt ist und mit dem der Trommelkörper (6) in eine zweite Drehrichtung bewegbar ist, mit den Schritten:
a) Erfassen eines Signals zum Betreiben des Aktuators (2);
b) Erfassen der Temperatur des Anstellkörpers und/oder des Rückstellkörpers durch mindestens ein Sensormittel;
c) Erwärmen und/oder Bestromen des Anstellmittels (8) durch eine Einstelleinheit und Blockieren eines Erwärmen des Rückstellmittels (10) durch eine Steuereinheit, wenn die Temperatur des Anstellmittels (8) unter einer bestimmten Temperatur liegt und/oder Bestromen des Rückstellmittels (10) durch die Einstelleinheit und Blockieren eines Erwärmen des Anstellmittels (8) durch die Steuereinheit, wenn die Temperatur des Anstellmittels (8) unter einer bestimmten Temperatur liegt.

## Claims

1. An actuator (2) for an exterior rear view mirror (4) of a vehicle having at least one actuator pin, at least one drum body (6) enclosing a cavity, in which the actuator pin can be arranged or is arranged in a non-rotational manner, at least one clamping means (8) which comprises at least one shape-memory element which can be fixed or is fixed to the drum body (6) and with which the drum body (6) can be moved in a first rotational direction, and at least one return means (10) which comprises at least one shape-memory element which can be fixed or is fixed to the drum body (6) and with which the drum body (6) can be moved in a second rotational direction, **characterized in that** the clamping means (8) and/or the return means (10) can be fixed or are fixed on a winding portion (12) of the drum body (6) and in the winding portion (12) of the drum body (6) at least quarter of a winding, in particular at least half a winding, in particular an entire winding, in particular several windings are applied.

2. The actuator (2) according to Claim 1, **characterized in that** the clamping means (8) and the return means (10) are fixed with the same or a different direction of rotation on the winding portion (12) of the drum body (6).

3. The actuator (2) according to Claim 1 or 2, **characterized in that** the winding portion (12) comprises at least one, particularly spiral receptacle (14), in which the clamping means (8) and/or the return means (10) are held at least in areas, in particular are held against movement in the radial direction.

4. The actuator (2) according to at least one of the preceding claims, **characterized by** at least one insulating means (16) which can be arranged or is arranged between the clamping means (8) and/or the return means (10) and the winding portion (12).

5. The actuator (2) according to Claim 4, **characterized in that** the insulating means (16) comprises ceramic and/or glass.

6. The actuator (2) according to at least one of the preceding claims, **characterized in that** the winding portion (12) is formed on a particularly cylindrical sheathing of the drum body (6).

7. The actuator (2) according to at least one of the preceding claims, **characterized in that** the actuator pin can be fixed or is fixed in a non-rotational manner to a housing of the exterior rear view mirror (4) or to a body element.

8. The actuator (2) according to at least one of the preceding claims, **characterized in that** the drum body (6) can be fixed or is fixed in a non-rotational manner to the housing of the exterior rear view mirror (4) or to the body element.

9. The actuator (2) according to at least one of the preceding claims, **characterized in that** the clamping means (8) and/or the return means (10) comprise a wire made of shape-memory material, in particular a shape-memory material having a two-way (memory) effect which, on energizing and/or due to a temperature change, involves a reduction of the extension of the clamping means (8) and/or the return means (10).

10. The actuator (2) according to at least one of the preceding claims, **characterized in that** the clamping means (8) and/or the return means (10) comprise a spring element, with which the return means (10) and/or the clamping means (8) can be biased or are biased in a non-actuated parking position.

11. The actuator (2) according to at least one of the preceding claims, **characterized by** at least one adjusting unit to which the clamping means (8) and/or the return means (10) having a free end can be arranged and can be acted upon by the adjusting unit with electrical energy or heat.

12. The actuator (2) according to at least one of the preceding claims, **characterized by** at least one control unit, by means of which energizing of, and/or the application of heat to, the clamping means (8) and/or the return means (10) by the adjusting unit can be controlled.

13. The actuator (2) according to Claim 12, **characterized by** at least one sensor means which is functionally assigned to the control unit, with which at least the temperature of the clamping means (8) and/or of the return means (10) can be detected, in particular by the determination of an electrical resistance.

14. Exterior rear view mirror (4) for a motor vehicle having at least one housing and at least one actuator (2), in particular according to any one of Claims 1 to 13.

15. A method for operating an actuator (2), in particular according to any one of Claims 1 to 13, having at least one actuator pin, at least one drum body (6) enclosing a cavity, in which the actuator pin can be arranged or is arranged in a non-rotational manner, at least one clamping means (8) which comprises at least one shape-memory element which can be fixed or is fixed to the drum body (6) and with which the drum body (6) can be moved in a first rotational direction, and at least one return means (10) which comprises at least one shape-memory element which can be fixed or is fixed to the drum body (6) and with which the drum body (6) can be moved in a second rotational direction, comprising the steps of:
a) Detecting a signal for operating the actuator (2);
b) Detecting the temperature of the clamping body and/or the return body by at least one sensor means;
c) The application of heat to, and/or energizing of, the clamping means (8) by means of an adjusting unit and blocking of the application of heat to the return means (10) by a control unit when the temperature of the clamping means (8) is below a certain temperature and/or energizing of the return means (10) by the adjusting unit and blocking of the application of heat to the clamping means (8) by the control unit when the temperature of the clamping means (8) is below a certain temperature.

## Revendications

1. Actionneur (2) destiné à un rétroviseur extérieur (4) d'un véhicule automobile, ayant au moins un tenon d'actionneur, ayant au moins un corps d'enrouleur (6) comprenant une cavité, où le tenon d'actionneur peut être agencé ou est agencé de manière non rotative, ayant au moins un moyen de mise en place (8), qui comporte au moins un élément à mémoire de forme, qui peut être fixé ou qui est fixé sur le corps d'enrouleur (6), et à l'aide duquel le corps d'enrouleur (6) peut être déplacé dans une première direction de rotation, et ayant au moins un moyen de rappel (10), qui comporte au moins un élément à mémoire de forme, qui peut être fixé ou qui est fixé sur le corps d'enrouleur (6), et à l'aide duquel le corps d'enrouleur (6) peut être déplacé dans une seconde direction de rotation, **caractérisé en ce que** le moyen de mise en place (8) et/ou le moyen de rappel (10) peut être fixé ou est fixé sur une partie d'enroulement (12) du corps d'enrouleur (6), et est disposé contre la partie d'enroulement (12) du corps d'enrouleur (6) à l'aide d'au moins un quart d'enroulement, en particulier au moins un demi enroulement, en particulier un enroulement entier, en particulier une multitude d'enroulements.

2. Actionneur (2) selon la revendication 1, **caractérisé en ce que** le moyen de mise en place (8) et le moyen de rappel (10) sont fixés sur la partie d'enroulement (12) du corps d'enrouleur (6) en ayant le même sens de rotation, ou des sens de rotation différents.

3. Actionneur (2) selon la revendication 1 ou 2, **caractérisé en ce que** la partie d'enroulement (12) comporte au moins un logement (14), en particulier en forme de spirale, dans lequel le moyen de mise en place (8) et/ou le moyen de rappel (10) sont supportés en étant guidés au moins localement, en particulier sont supportés à l'encontre d'un déplacement dans une direction radiale.

4. Actionneur (2) selon l'une quelconque des revendications précédentes, **caractérisé par** au moins un moyen d'isolation (16), qui peut être agencé ou qui est agencé entre le moyen de mise en place (8) et/ou le moyen de rappel (10) et la partie d'enroulement (12).

5. Actionneur (2) selon la revendication 4, **caractérisé en ce que** le moyen d'isolation (16) comporte de la céramique et/ou du verre.

6. Actionneur (2) selon l'une quelconque des revendications précédentes, **caractérisé en ce que** la partie d'enroulement (12) est constituée d'une gaine, en particulier cylindrique, du corps d'enrouleur (6).

7. Actionneur (2) selon l'une quelconque des revendications précédentes, **caractérisé en ce que** le tenon d'actionneur peut être fixé ou est fixé de manière non rotative sur un boîtier du rétroviseur extérieur (4) ou sur un élément de carrosserie.

8. Actionneur (2) selon l'une quelconque des revendications précédentes, **caractérisé en ce que** le corps d'enrouleur (6) peut être fixé ou est fixé de manière non rotative sur le boîtier du rétroviseur extérieur (4) ou sur un élément de carrosserie.

9. Actionneur (2) selon l'une quelconque des revendications précédentes, **caractérisé en ce que** le moyen de mise en place (8) et/ou le moyen de rappel (10) comporte un fil en un matériau à mémoire de forme, en particulier un matériau à mémoire de forme présentant un effet bidirectionnel (mémoire) qui, via une alimentation en courant et/ou un changement de température, présente une réduction de l'étirement du moyen de mise en place (8) et/ou du moyen de rappel (10).

10. Actionneur (2) selon l'une quelconque des revendications précédentes, **caractérisé en ce que** le moyen de mise en place (8) et/ou le moyen de rappel (10) comporte un élément à ressort, à l'aide duquel le moyen de rappel (10) ou le moyen de mise en place (8) peut être mis ou est mis sous contrainte dans une position de repos non actionnée.

11. Actionneur (2) selon l'une quelconque des revendications précédentes, **caractérisé par** au moins une unité de réglage, sur laquelle le moyen de mise en place (8) et/ou le moyen de rappel (10) peut être agencé à l'aide d'une extrémité libre, et peut être alimenté en énergie électrique ou en chaleur via l'unité de réglage.

12. Actionneur (2) selon l'une quelconque des revendications précédentes, **caractérisé par** au moins une unité de commande, par l'intermédiaire de laquelle une alimentation en courant et/ou en chaleur du moyen de mise en place (8) et/ou du moyen de rappel (10) peut être commandée via l'unité de réglage.

13. Actionneur (2) selon la revendication 12, **caractérisé par** au moins un moyen de détection associé fonctionnellement à l'unité de réglage, à l'aide duquel au moins la température du moyen de mise en place (8) et/ou du moyen de rappel (10) peut être détectée, en particulier par la détermination d'une résistance électrique.

14. Rétroviseur extérieur (4) destiné à un véhicule automobile, ayant au moins un boîtier et ayant au moins un actionneur (2), en particulier selon l'une quelconque des revendications 1 à 13.

15. Procédé pour faire fonctionner un actionneur (2), en particulier selon l'une quelconque des revendications 1 à 13, ayant au moins un tenon d'actionneur, ayant au moins un corps d'enrouleur (6) compris dans une cavité, où le tenon d'actionneur peut être agencé ou est agencé de manière non rotative, ayant au moins un moyen de mise en place (8), qui comporte au moins un élément à mémoire de forme, qui peut être fixé ou qui est fixé sur le corps d'enrouleur (6), et à l'aide duquel le corps d'enrouleur (6) peut être déplacé dans une première direction de rotation, et ayant au moins un moyen de rappel (10), qui comporte au moins un élément à mémoire de forme, qui peut être fixé ou qui est fixé sur le corps d'enrouleur (6), et à l'aide duquel le corps d'enrouleur (6) peut être déplacé dans une seconde direction de rotation, comportant le consistant à :
a) détecter un signal visant à faire fonctionner l'actionneur (2) ;
b) détecter la température du corps d'enrouleur et/ou du corps de rappel par l'intermédiaire d'au moins un moyen de détection ;
c) alimenter en chaleur et/ou en courant le moyen de mise en place (8) par l'intermédiaire d'une unité de réglage, et bloquer un réchauffement du moyen de rappel (10) par l'intermédiaire d'une unité de commande, lorsque la température du moyen de mise en place (8) est inférieure à une température déterminée, et/ou alimenter en courant le moyen de rappel (10) par l'intermédiaire de l'unité de réglage, et bloquer un réchauffement du moyen de rappel (8) par l'intermédiaire de l'unité de commande, lorsque la température du moyen de rappel (8) est inférieure à une température déterminée.
